# EUROPÄISCHE PATENTSCHRIFT

(11) **EP 2 457 799 B1**
(45) Veröffentlichungstag und Bekanntmachung des Hinweises auf die Patenterteilung: **09.01.2019**
(21) Anmeldenummer: 10075734.3
(22) Anmeldetag: 12.11.2010
(51) Int. Cl.: B61F 5/20, B61F 7/00, B23Q 1/00, B23Q 3/155, B25J 15/04, B60B 17/00, B61G 5/02, F16L 37/00, B25J 17/02, B25J 19/00, B61F 5/00, B61F 5/22, F16L 37/56

(54) **Multikupplung**
Multicoupling
Dispositif d'accouplage à plusieurs connections

(43) Veröffentlichungstag der Anmeldung: 30.05.2012
(73) Patentinhaber: Stäubli Tec-Systems GmbH, 95448 Bayreuth (DE)
(72) Erfinder: Kohler, Wolfgang, 91257 Pegnitz/Trockau (DE)
(74) Vertreter: Pfenning, Meinig & Partner mbB

(56) Entgegenhaltungen:
- DE-U1- 20 018 124
- DE-U1-202008 007 713
- GB-A- 455 332

## Beschreibung

Die Erfindung betrifft eine Multikupplung gemäß dem Oberbegriff des Hauptanspruchs. Die Erfindung betrifft ferner ein Kupplungssystem mit einer solchen Multikupplung.

Multikupplungen mit zwei Anschlussträgern, die jeweils mindestens ein Anschlusselement aufweisen, welche zur Übertragung von Medien, Signalen und/oder Energie komplementär ausgestaltet sind, sind aus einer Vielzahl unterschiedlicher Gebiete der Technik bekannt, insbesondere aus der Fahrzeugtechnik, dem Maschinenbau und der Robotertechnik.

Multikupplungen können neben den Anschlusselementen zusätzlich Verbindungselemente aufweisen zur Herstellung einer mechanisch stabilen, zum Beispiel form- oder kraftschlüssigen, Verbindung zwischen den beiden Anschlussträgern.

Es kann zusätzlich oder alternativ auch vorgesehen sein, dass eine derartige Multikupplung Teil eines Kupplungssystems mit zwei Kupplungsgliedern ist, bei dem die beiden Anschlussträger jeweils mit einem der beiden Kupplungsglieder verbunden sind. Die Kupplungsglieder können außerdem miteinander korrespondierende Verbindungselemente aufweisen zum Herstellen einer mechanisch stabilen (beispielsweise form- oder kraftschlüssigen) Verbindung zwischen den beiden Kupplungsgliedern.

Dabei sind die beiden Anschlussträger meistens so mit den Kupplungsgliedern verbunden, dass bei einem Zusammenführen der beiden Kupplungsglieder gleichzeitig auch die Anschlusselemente der beiden Anschlussträger zusammengeführt und miteinander verbunden werden können.

Aus der Robotertechnik sind derartige Multikupplungen bzw. Kupplungssysteme etwa aus den Druckschriften DE 200 18 124 U1 und DE 20 2008 007 713 U1 bekannt, die einen Werkzeugwechsel an Industrierobotern ermöglichen.

Aus der Fahrzeugtechnik sind derartige Kupplungssysteme beispielsweise für Schienenfahrzeuge bekannt, mit denen ein Wagenaufbau, wie etwa ein Wagenkasten eines Passagier- oder Güterwaggons, mit einem Drehgestell verbunden ist. Das Drehgestell ist ein schienentaugliches Laufwerk mit einem Rahmen, in dem zwei oder mehr Radsätze gelagert sind. Das erste der beiden Kupplungsglieder ist an einer Unterseite des Wagenaufbaus (Wagenkasten) angeordnet und weist als Verbindungselement in der Regel einen Drehzapfen auf. Das zweite Kupplungsglied ist an einer Oberseite des Drehgestells angeordnet und weist als Verbindungselement eine entsprechende Aufnahme für den Drehzapfen auf, beispielsweise eine Drehpfanne oder ein Drehgelenk. Es ist bekannt, dass der Drehzapfen in dieser Aufnahme entlang seiner Längsachse drehbar und/oder kippbar gelagert sein kann, um etwa Drehbewegungen des Drehgestells relativ zum Wagenaufbau, beispielsweise in einer Kurve, zuzulassen. Insgesamt sind also 3-dimensionale Relativbewegungen zwischen den beiden Kupplungsgliedern eines solchen Kupplungssystems möglich.

Das Drehgestell umfasst häufig ein Bremssystem, so dass über das Kupplungssystem in der Regel eine Bremsflüssigkeit übertragen werden muss. Ferner kann das Drehgestell Sensoreinheiten umfassen, so dass entsprechende Messdaten über das Kupplungssystem übertragbar sein müssen. Außerdem können weitere hydraulische oder pneumatische Komponenten wie Schließ- oder Sicherungssysteme vorgesehen sein, welche eine Übertragung entsprechender pneumatischer oder hydraulischer Medien (z.B. Wasser, Öl, Luft) über das Kupplungssystem erforderlich machen. Dabei ist es insbesondere entscheidend, dass die Verbindungen zwischen den Anschlusselementen auch bei den oben beschriebenen 3-dimensionalen Relativbewegungen zwischen dem Wagenkasten und dem Drehgestell, etwa bei einer Kurvenfahrt, erhalten bleiben. Dies wird in der Regel durch eine gefederte Verbindung zwischen einem der Anschlussträger mit einem der Kupplungsglieder, etwa durch eine zentrale Spiralfeder, gewährleistet.

Kupplungssysteme müssen in der Regel leicht verbindbar und wieder lösbar sein. Beispielsweise ist dies bei den oben beschriebenen Drehgestellkupplungen bei einem bei einem Grenzübergang zwischen Ländern mit unterschiedlichen Spurweiten wichtig.

Bei den beschriebenen Multikupplungen bzw. Kupplungssystemen, insbesondere für Schienenfahrzeuge und Werkzeugwechsler für Industrieroboter, stellt es sich nun als schwierig heraus, eine stabile und sichere mechanische Verbindung herzustellen und gleichzeitig eine zuverlässige Übertragung von Medien, Signalen und/oder Energie zu gewährleisten, insbesondere dann, wenn 3-dimensionale Relativbewegungen und Toleranzausgleiche der Kupplungsglieder erlaubt sein sollen. Ferner ist das Verbinden und Lösen einer solchen Verbindung, insbesondere bei einem Drehgestellwechsel oder einem Werkzeugwechsel bei einem Industrieroboter, oft zeitaufwendig, insbesondere bei komplexen Kupplungssystemen, die über entsprechende Freiheitsgrade für Relativbewegungen zwischen den beiden Kupplungsgliedern verfügen. Diese Freiheitsgrade (etwa für Drehbewegungen entlang einer Verbindungsachse zwischen den beiden Kupplungsgliedern) können insbesondere eine korrekte relative Ausrichtung der Anschlussträger zueinander erschweren, wenn diese jeweils mit einem der beiden Kupplungsglieder verbunden sind.

Außerdem besteht das Problem, dass die Anschlusselemente der Anschlussträger der Multikupplung möglichst vor einer Einwirkung von äußeren Kräften geschützt werden müssen. Dies ist insbesondere dann schwierig, wenn die beiden Anschlussträger mit Kupplungsgliedern eines (flexiblen) Kupplungssystems verbunden sind, zwischen denen im verkuppelten Zustand Relativbewegungen möglich sein sollen, wie etwa bei der oben beschriebenen Drehgestellkupplung. Als besonders schwierig stellt es sich heraus, bei 3-dimensionalen Relativbewegungen zwischen zwei Kupplungsgliedern eines flexiblen Kupplungssystems mit entsprechenden Freiheitsgraden eine sichere Verbindung zwischen den Anschlusselementen zu gewährleisten.

Es ist also die Aufgabe der vorliegenden Erfindung, eine Multikupplung vorzuschlagen, welche die genannten Probleme des Stands der Technik löst. Die Multikupplung soll also zwei möglichst einfach, schnell und sicher verbindbare Anschlussträger mit Anschlusselementen aufweisen. Bei Bestehen einer Verbindung zwischen den beiden Anschlussträgern soll eine zuverlässige Übertragung von Medien, Energie und/oder Signalen möglich sein. Insbesondere sollen die Anschlussträger mit Kupplungsgliedern eines Kupplungssystems so verbindbar sein, dass auch bei 3-dimensionalen Relativbewegungen oder einem 3-dimensionalen Toleranzausgleich zwischen den beiden Kupplungsgliedern sich die Anschlusselemente bei einem Zusammenführen der beiden Kupplungsglieder leicht verbinden lassen und die genannte Übertragung von Medien, Energie und/oder Signalen bei Bestehen dieser Verbindung auch bei Relativbewegungen zwischen den beiden Kupplungsgliedern nicht gefährdet wird. Es soll ferner auch ein Kupplungssystem mit einer derartigen Multikupplung vorgeschlagen werden. Das Kupplungssystem soll also zwei Kupplungsglieder umfassen, an denen jeweils einer der beiden Anschlussträger der Multikupplung so befestigt sind, dass 3-dimensionale Relativbewegungen oder Toleranzausgleiche zwischen den beiden Kupplungsglieder ermöglicht werden, ohne dass die Verbindung zwischen den Anschlusselementen der Multikupplung gefährdet wird.

Diese Aufgabe wird gelöst durch eine Multikupplung gemäß dem Anspruch 1 sowie durch ein Kupplungssystem gemäß Anspruch 12. Weiterentwicklungen und bevorzugte Ausführungsformen ergeben sich mit den übrigen Ansprüchen.

Die erfindungsgemäße Multikupplung umfasst demnach einen ersten Anschlussträger mit mindestens einem ersten Anschlusselement und einen zweiten Anschlussträger mit mindestens einem zweiten Anschlusselement. Das erste Anschlusselement und das zweite Anschlusselement sind komplementär zueinander ausgestaltet zur Medien-, Energie- und/oder Signalübertragung. Der erste Anschlussträger weist ferner mindestens ein Federmodul auf zum 3-dimensionalen Toleranzausgleich und/oder für 3-dimensionale Relativbewegungen zwischen dem ersten Anschlussträger und einem Kupplungsglied eines Kupplungssystems. Dabei ist es entscheidend, dass das Federmodul mindestens zwei gegeneinander verkippte Federelemente aufweist. Dabei können die Federelemente einen Kippwinkel α zwischen 20° und 160° einschließen. Vorzugsweise liegt der Kippwinkel in einem Bereich zwischen 40° und 120°.

Ein solches Federungsmodul hat den Vorteil, dass es sich besonders gut zur Übertragung von Drehmomenten von dem Kupplungsglied auf den ersten Anschlussträger eignet und für eine Induzierung einer Drehbewegungen des ersten Anschlussträgers relativ zum Kupplungsglied. Durch die Verkippung der Federelemente gegeneinander werden die Federelemente bei einer Verdrehung des ersten Anschlussträgers relativ zum Kupplungsglied unterschiedlich stark gedehnt oder gestaucht. Bei einer parallelen Ausrichtung der Federelemente würden sich dahingegen die Dehnungen oder Stauchungen der Federelemente bei einer Verdrehung oder einem Verkippen des ersten Anschlussträgers relativ zum Kupplungsglied weniger stark oder überhaupt nicht voneinander unterschieden, so dass ein geringeres rückstellendes Drehmoment induziert werden würde.

Auf diese Weise wird durch die erfindungsgemäße Verkippung der Federelemente besonders zuverlässig eine ausreichend starke Drehkraft (Drehmoment) in Richtung einer Gleichgewichtslage des ersten Anschlussträgers relativ zum Kupplungsglied herstellbar ist. Auf diese Weise ist eine Sollposition des ersten Anschlussträgers beim Zusammenführen mit dem zweiten Anschlussträger leichter und kontrollierter herstellbar, wodurch sich das Verbinden der Anschlusselemente wesentlich vereinfacht. Gleichzeitig sind durch das Federmodul ein 3-dimensionaler Toleranzausgleich sowie 3-dimensionale Relativbewegungen zwischen dem ersten Anschlussträger und dem Kupplungsglied ermöglicht.

Zwar beschreibt auch GB 455 332 A eine Multikupplung mit einem ersten Anschlussträger und einem zweiten Anschlussträger, wobei der erste Anschlussträger zwei gegeneinander verkippte Federelemente aufweist. Jedoch ist gemäß GB 455 332 A kein 3-dimensionaler Toleranzausgleich zwischen dem ersten Anschlussträger und einem Kupplungsglied vorgesehen, sondern lediglich ein Toleranzausgleich in nur einer Dimension (in Drehrichtung).

Durch das hier vorgeschlagene Federmodul kann also auf besonders zuverlässige Weise sichergestellt werden, dass sich der erste Anschlussträger relativ zu einem Kupplungsglied in einer Sollposition befindet, wenn das Kupplungsglied mit einem weiteren Kupplungsglied (an dem der zweite Anschlussträger befestigt ist) zusammengeführt wird. Diese Sollposition ist so gewählt, dass bei einem Zusammenführen der beiden Kupplungsglieder die Anschlusselemente der beiden Kupplungsträger korrespondierend zueinander ausgerichtet sind und automatisch miteinander verbindbar sind bei einem weiteren Zusammenführen der beiden Kupplungsglieder. Dies erhöht eine Positioniergenauigkeit der zu verbindenden Anschlusselemente relativ zueinander und erleichtert und beschleunigt somit die Herstellung der Verbindung der beiden Kupplungshälften. Insbesondere entfällt auf diese Weise eine zusätzliche, beispielsweise manuelle, relative Ausrichtung und Positionierung der Anschlusselemente.

Bei Bestehen einer Verbindung der Anschlusselemente, sind diese effektiv vor einer äußeren Krafteinwirkung geschützt, etwa bei Relativbewegungen der genannten Kupplungsglieder. Solche Relativbewegungen werden durch das Federmodul zwischen dem ersten Anschlussträger und dem erstgenannten Kupplungsglied aufgefangen, so dass eine sichere Übertragung von Medien, Signalen und/oder Energie durch die Anschlusselemente gewährleistet ist. Die beiden Anschlussträger sind aufgrund des Federmoduls also auch bei einer flexiblen, beweglichen Kupplung der beiden Kupplungsglieder starr miteinander verbindbar und von Relativbewegungen der beiden Kupplungsglieder entkoppelt. Es wird somit eine schwimmende Lagerung der Multikupplung zwischen den Kupplungsgliedern erzielt.

Es kann vorgesehen sein, dass mindestens eines der Federungsmodule des Lagers ein Federelement mit einer Spiralfeder und/oder einer Gasdruckfeder beinhaltet, welche sich durch eine besonders große Zuverlässigkeit und Haltbarkeit sowie nur geringe Materialkosten auszeichnen.

Ferner kann das mindestens eine erste Anschlusselement und das mindestens eine zweite Anschlusselement zur Übertragung elektrischer Energie, elektrischer und/oder optischer Signale, zur Übertragung von Medien, wie etwa pneumatischer und/oder hydraulischer Medien, ausgestaltet sein. Dabei kommen als Medien insbesondere Bremsflüssigkeiten oder Druckluft, aber auch Kühlflüssigkeiten in Frage. Die Anschlusselemente sind dabei vorzugsweise als Stecker und zugehörige Steckdosen oder Steckbuchsen ausgeführt. Es kann auch vorgesehen sein, dass mindestens eine Schutzabdeckung vorgesehen ist, mit der das erste Anschlusselement und/oder das zweite Anschlusselement abdeckbar ist, wobei die Schutzabdeckung bei einem Zusammenführen der beiden Kupplungshälften mittels eines Schiebers automatisch wegklappbar ist für ein Freilegen der Anschlusselemente.

Erfindungsgemäß ist außerdem vorgesehen, dass das Federmodul mit einem ersten Ende des Federmoduls an dem ersten Anschlussträger befestigt ist. Zur Verbindung mit dem Kupplungsglied ist ein zweites Ende des Federmoduls gegenüber dem ersten Ende parallel zu einer bevorzugten Fügerichtung versetzt. Dabei kann die bevorzugte Fügerichtung beispielsweise durch die Ausrichtung des ersten Anschlusselementes vorgegeben sein, oder durch die Ausrichtung eines Verbindungselements, wie etwa einem Verbindungsbolzen oder einem Drehzapfen. Auf diese Weise wird vorteilhafterweise der Toleranzausgleich parallel zu dieser Fügerichtung vereinfacht, indem durch die Federelemente Rückstellkräfte parallel zu dieser Fügerichtung induziert werden können sowie gleichzeitig Drehmomente um eine Drehachse parallel oder senkrecht zu dieser Fügerichtung, insbesondere bei einer Torsion und/oder Verkippung des ersten Anschlussträgers relativ zu dem erstgenannten Kupplungsglieds. Zu diesem Zweck sind die Federelemente vorzugsweise ausgerichtet mit Richtungskomponenten parallel zu der bevorzugten Fügerichtung der Multikupplung bzw. des erstgenannten Kupplungsglieds. Die Federelemente verlaufen dann also beispielsweise von dem ersten Ende des Federmoduls zu dem zweiten Ende des Federmoduls.

Entsprechend ist bei Bestehen einer Verbindung zwischen einem Kupplungsglied und dem ersten Anschlussträger dieser in seiner Sollposition beabstandet von dem Kupplungsglied gelagert zur Ermöglichung von axialen Verschiebungen des Anschlussträgers bezüglich der bevorzugten Fügerichtung auf das Kupplungsglied zu und von diesem weg, sowie für ein einfaches Kippen des Anschlussträgers relativ zur genannten Fügerichtung.

In einer Weiterentwicklung ist vorgesehen, dass das Federmodul ein Pendelglied umfasst, das an Endstücken der Federelemente befestigt ist. Durch dieses Pendelglied können die einzelnen Federelemente zusammengefasst werden, wodurch ein gleichzeitiger Austausch der Federelemente sowie eine gleichzeitige Verbindung der Federelemente mit dem Kupplungsglied zu und von diesem weg, sowie für ein einfaches Kippen des Anschlussträgers relativ zur genannten Fügerichtung.

In einer Weiterentwicklung ist vorgesehen, dass das Federmodul ein Pendelglied umfasst, das an Endstücken der Federelemente befestigt ist. Durch dieses Pendelglied können die einzelnen Federelemente zusammengefasst werden, wodurch ein gleichzeitiger Austausch der Federelemente sowie eine gleichzeitige Verbindung der Federelemente mit dem Kupplungsglied bzw. mit dem ersten Anschlussträger erleichtert und schneller durchführbar ist. Das Pendelglied kann auch als eine Kupplungsplatte ausgestaltet sind, die ihrerseits Verbindungselemente aufweist, wie etwa Verschraubungen, mit denen die Kupplungsplatte beispielsweise mit einem Kupplungsglied verbunden werden kann.

In einer Weiterentwicklung weisen die Federelemente Endstücke auf mit Achslagern, die vorzugsweise senkrecht zu Längsachsen der Federelemente ausgerichtet sind. Diese Achslager sind geeignet Verbindungsachsen aufzunehmen, um welche die Federelemente kippbar gelagert und mit den ersten Anschlussträger oder einem Kupplungsglied beweglich verbunden werden können. Dementsprechend kann auch vorgesehen sein, dass das oben genannte Pendelglied entsprechende Aufnahmen für solche Verbindungsachsen aufweist oder aber seinerseits derartigen Achslager umfasst. Durch eine kippbare Lagerung der Federelemente werden die oben beschriebenen Ausgleichsbewegungen (Toleranzausgleich, Relativbewegungen) zwischen dem ersten Anschlussträger und dem Kupplungsglied vereinfacht.

Eine weitere Vereinfachung dieser Ausgleichbewegungen und für eine noch effektivere Herstellung entsprechender Rückstellkräfte und Drehmomente kann außerdem vorgesehen sein, dass das Federmodul drei oder mehr Federelemente aufweist.

In einer Weiterentwicklung ist vorgesehen, dass die Federelemente des Federmoduls den ersten Anschlussträger durch eine oder mehrere Durchtrittsöffnungen in dem ersten Anschlussträger durchlaufen zur Erzielung eines besonders kompakten Aufbaus der Multikupplung. Dabei können die Federelemente also den ersten Anschlussträger durch die Durchgangsöffnungen (in dem ersten Anschlussträger) von einer dem ersten Kupplungsglied abgewandten Seite (des ersten Anschlussträgers) zu einer dem ersten Kupplungsglied zugewandten Seite (des ersten Anschlussträgers) durchlaufen. Somit können relativ lange und flexible Federungselemente vorgesehen werden, ohne dass sich der Aufbau der Multikupplung oder eines Kupplungssystems mit einer solchen Multikupplung in Richtung der bevorzugten Fügerichtung wesentlich vergrößert.

In einer Weiterentwicklung ist vorgesehen, dass die Multikupplung mehrere Federmodule aufweist, die um eine Mittelachse des ersten Anschlussträgers herum angeordnet sind und vorzugsweise in einer Umlaufrichtung um diese Mittelachse gleichmäßig voneinander beabstandet sind. Dabei verläuft die Mittelachse parallel zu der bevorzugten Fügerichtung, die durch die Fügerichtung des mindestens einen Anschlusselements des ersten Anschlussträger gegeben ist. Vorzugsweise läuft die Mittelachse zentral durch den ersten Anschlussträger hindurch.

Dadurch wird der bereits oben beschriebene Schutz der Anschlusselemente vor externen Kräften und Stößen noch weiter verbessert, da auf diese Weise die durch die Federungsmodule auf den ersten Anschlussträger übertragene Kräfte, welche insbesondere bei Relativbewegungen zwischen den beiden Kupplungshälften auftreten, besonders gleichmäßig auf den ersten Anschlussträger verteilt werden, wodurch die Stabilität und die Haltbarkeit der Anschlusselemente und der Verbindungen zwischen den Anschlusselementen verbessert wird und somit auch die der Übertragung der Medien, der Signale und/oder der Energie über die Anschlusselemente.

In einer Weiterentwicklung ist vorgesehen, dass der erste Anschlussträger eine Durchtrittsöffnung aufweist zum Durchführen eines Verbindungselements des Kupplungssystems durch den ersten Anschlussträger. Dabei kann dieses Verbindungselement etwa als ein Verbindungsbolzen oder Zapfen ausgestaltet sein und an einem mit dem ersten oder zweiten Anschlussträger verbundenen Kupplungsglied des Kupplungssystems angeordnet sein. Vorzugsweise ist dieses Verbindungselement mit seiner Längsachse entlang der oben genannten Mittelachse angeordnet und die Federmodule zur Erzielung der beschriebenen Vorteile gleichmäßig um diese Mittelachse herum angeordnet.

Es kann auch vorgesehen sein, die Anschlussträger zueinander komplementäre Befestigungselemente (Verbindungselemente) aufweisen zur Herstellen einer formschlüssigen und/oder kraftschlüssigen Verbindung zwischen den beiden Anschlussträgern. Diese Befestigungselemente oder Verbindungselemente können als eine zapfenförmige Erhebung und eine zugehörige Aufnahme ausgestaltet ist. Solche Zapfen/Aufnahme-Kupplungen lassen sich besonders leicht verbinden, erlauben Drehbewegungen der beiden Verbindungshälften um eine Längsachse des Zapfens, können äußerst robust ausgestaltet werden und sind somit insbesondere für Anwendungen in der Fahrzeugtechnik gut geeignet. Es kann auch vorgesehen sein, wie oben beschrieben, dass derartige Verbindungselemente auch oder ausschließlich an den beiden Kupplungsgliedern eines Kupplungssystems angeordnet sind, mit denen die Anschlussträger jeweils verbunden sind. Vorzugsweise weisen die Anschlussträger dann Durchtrittsöffnungen auf zum Hindurchführen dieser Verbindungselemente durch die Anschlussträger hindurch.

In einer Ausführungsform der Multikupplung sind auf dem ersten Anschlussträger und auf dem zweiten Anschlussträger miteinander korrespondierende Führungsvorrichtungen angeordnet zum gegenseitigen Ausrichten der beiden Anschlussträger beim Zusammenführen der beiden Anschlussträger. Diese Führungsvorrichtungen sind vorteilhafterweise so ausgestaltet, dass sie beim Zusammenführen der beiden Anschlussträger (bzw. der beiden Kupplungsglieder) ineinandergreifen, wobei eine der beiden Führungsvorrichtung als Aufnahme der anderen Führungsvorrichtung ausgestaltet sein kann. Vorzugsweise ist die Aufnahme dann zum Ende hin trichterförmig geöffnet und/oder verjüngt sich die andere Führungsvorrichtung zum Ende hin.

Das erfindungsgemäße Kupplungssystem umfasst ein erstes Kupplungsglied mit mindestens einem ersten Verbindungselement und ein zweites Kupplungsglied mit mindestens einem zweiten Verbindungselement zum Herstellen einer lösbaren Verbindung zwischen den beiden Kupplungsgliedern. Das Kupplungssystem umfasst ferner eine Multikupplung hier vorgeschlagener Art. Der erste Anschlussträger der Multikupplung ist über das Federmodul mit dem ersten Kupplungsglied verbunden undermöglicht auf diese Weise einen 3-dimensionalen Toleranzausgleich sowie 3-dimensionale Relativbewegungen zwischen dem ersten Anschlussträger und dem ersten Kupplungsglied. Ferner ist der zweite Anschlussträger mit dem zweiten Kupplungsglied verbunden. Dabei kann das zweite Kupplungsglied auch einteilig mit dem ersten Anschlussträger ausgestaltet sein bzw. mit diesem identisch oder stoffschlüssig verbunden sein.

Zusätzlich zu den bereits beschriebenen Vorteilen der in dem Kupplungssystem enthaltenen Multikupplung, die sich direkt auf das Kupplungssystem übertragen, hat das erfindungsgemäße Kupplungssystem den Vorteil, dass die Federmodule aufgrund ihrer Anordnung zwischen dem ersten Kupplungsglied und dem ersten Anschlussträge besonders leicht zugänglich sind und somit im Bedarfsfall leichten auswechselbar sind. Federungsmodule, die etwa vollständig oder teilweise innerhalb des Kupplungsglieds verlaufen, sind dahingegen viel schwieriger auszutauschen. Dies ist insbesondere der Fall bei Drehgestellkupplungen, bei denen das Federmodul durch eine einzelne zentrale Spiralfeder gegeben ist, die um eine Drehzapfenaufnahme herum innerhalb eines Kupplungsgliedes verankert ist und auf diese Weise dieses Kupplungsglied mechanisch schwächt. Somit zeichnet sich das hier vorgeschlagene Kupplungssystem außerdem durch eine besonders große mechanische Stabilität aus.

Wie weiter oben beschrieben, ist es vorteilhafterweise möglich, dass das erste Kupplungsglied und der erste Anschlussträger in einer bevorzugten Fügerichtung des Kupplungssystems voneinander beabstandet angeordnet sind. Diese erlaubt zum einen Ausgleichsbewegungen parallel dieser Fügerichtung sowie Kippbewegungen quer zu dieser Fügerichtung. Außerdem erlaubt dies einen leichteren Zugang zu dem Federmodul, etwa zwecks Wartungsarbeiten.

Zur Herstellung einer flexiblen, beweglichen Verbindung zwischen den beiden Kupplungsgliedern kann ferner vorgesehen sein, dass das zweite Verbindungselement als ein Lager für das erste Verbindungselement ausgestaltet ist oder dass das erste Verbindungselement als ein Lager für das zweite Verbindungselement ausgestaltet ist.

Ferner kann vorgesehen sein, dass, wenn die beiden Kupplungsglieder miteinander verbunden sind, das Federmodul ein Anpresskraft auf den ersten Anschlussträger ausübt, mit der die korrespondierenden Anschlusselemente der beiden Kupplungsträger aufeinander gepresst werden für eine besonders sichere Verbindung zwischen den Anschlusselementen.

In einer Weiterentwicklung ist das Kupplungssystem als eine Drehgestellkupplung zum Verbinden eines Drehgestells mit einem Wagenaufbau, insbesondere für ein Schienenfahrzeug, ausgestaltet. Dabei kann das erste Verbindungselement als Drehzapfen und das zweite Verbindungselement als Drehzapfenaufnahme, vorzugsweise als eine Drehpfanne oder als Drehgelenk, ausgestaltet sein, wobei der Drehzapfen in der Drehzapfenaufnahme vorzugsweise um eine Längsachse des Drehzapfens drehbar und/oder kippbar und/oder längs dieser Langsachse verschiebbar gelagert ist. Dabei kann die Drehzapfenaufnahme innerhalb eines Ölbads angeordnet zur Verschleißreduzierung.

Ein derartiges Drehgestell hat den Vorteil, dass es besonders leicht und schnell gegen ein weiteres Drehgestell dieser Art auswechselbar ist und das die Verbindung zwischen den Anschlusselementen besonders stabil und zuverlässig sind, insbesondere weil die Anschlusselemente durch eine weitgehende mechanische Entkopplung des Anschlussträgers von dem Verbindungsträger vor der Einwirkung externer Kräfte und Stöße bei Relativbewegungen zwischen dem Drehgestell und dem Wagenaufbau besonders gut geschützt sind.

Ferner wird ein Schienenfahrzeug mit einem derartigen Drehgestell und einem Wagenaufbau vorgeschlagen. Dabei kann die erste Kupplungshälfte fest (oder ebenfalls beweglich gelagert, z.B. Durch Gummisilentblöcke) mit dem Wagenaufbau verbunden sein und die zweite Kupplungshälfte fest oder beweglich (beispielsweise mit Federn gelagert) mit dem Drehgestell verbunden sein. Das erste Verbindungselement kann als Drehzapfen und das zweite Verbindungselement als Drehzapfenaufnahme, vorzugsweise als eine Drehpfanne oder als Drehgelenk ausgestaltet sein, wie oben beschrieben, wobei der Drehzapfen in der Drehzapfenaufnahme vorzugsweise um eine Längsachse des Drehzapfens drehbar und/oder kippbar gelagert ist.

Ein solches Schienenfahrzeug zeichnet sich durch eine besonders leichte Auswechselbarkeit des Drehgestells aus und eignet sich deswegen besonders gut für den internationalen Schienenverkehr zwischen Ländern mit unterschiedlichen Spurweiten. Ein weiterer Vorteil ist die sichere und zuverlässige Verbindung zwischen den Anschlusselementen zur Übertragung von Medien, Signalen und/oder Energie.

Bei einem hier außerdem vorgeschlagenen Verfahren zum Wechseln eines Drehgestells eines solchen Schienenfahrzeugs wird zum Lösen der Drehgestellkupplung der Wagenaufbau des Schienenfahrzeugs von dem Drehgestell angehoben, wobei die Anschlusselemente der beiden Kupplungsglieder der Drehgestellkupplung und die Verbindungselemente der Drehgestellkupplung voneinander gelöst werden. Anschließend wird das Drehgestell durch ein weiteres Drehgestell, vorzugsweise der hier vorgeschlagenen Art, ausgetauscht und der Wagenaufbau auf das weitere Drehgestell abgesetzt wird. Dabei werden die am Wagenaufbau befindlichen Anschlusselemente mit den Anschlusselementen am Drehgestell und das Verbindungselement am Wagenaufbau mit dem Verbindungselement am Drehgestell miteinander verbunden.

Aufgrund der beschriebenen Vorteile des hier vorgeschlagenen Kupplungssystems und der Multikupplung ist dieses Verfahren besonders einfach und schnell durchführbar. Insbesondere lässt sich die Verbindung zwischen den Anschlusselementen besonders leicht herstellen, da der Anschlussträger mit dem (mindestens einen) ersten Anschlusselement durch die Federungsmodule in einer Sollposition (Gleichgewichtslage) gehalten wird und somit die relative Positionierung der Anschlusselemente beim Absetzen des Wagenaufbaus auf das Drehgestell automatisch durchgeführt wird. Die Genauigkeit dieser Positionierung kann mittels Führungsvorrichtungen an den beiden Kupplungshälften noch weiter gesteigert werden.

Im Folgenden wird die Erfindung anhand von in Figuren 1 bis 14 dargestellten speziellen Ausführungsbeispielen näher erläuter. Es zeigt:
- Figur 1: eine Multikupplung hier vorgeschlagener Art;
- Figur 2: einen Querschnitt durch die in Figur 1 gezeigte Multikupplung;
- Figur 3: ein Federmodul der in Figur 1 gezeigten Multikupplung;
- Figur 4: ein Federmodul hier vorgeschlagener Art mit drei Federelementen;
- Figur 5: eine Multikupplung hier vorgeschlagener Art verbunden mit einem Kupplungsglied;
- Figur 6: die in Figur 5 gezeigte Multikupplung mit miteinander verbundenen Anschlussträgern;
- Figur 7: einen Querschnitt durch die in Figur 6 gezeigte Multikupplung;
- Figur 8: ein Federmodul der in Figur 6 gezeigten Multikupplung in einer Gleichgewichtslage;
- Figur 9: das in Figur 8 gezeigte Federmodul außerhalb seiner Gleichgewichtslage;
- Figur 10: den ersten Anschlussträger der in Figur 5 gezeigten Multikupplung in einer Ansicht von unten;
- Figur 11: die in Figur 5 gezeigte Multikupplung in einer Seitenansicht;
- Figur 12: den zweiten Anschlussträger der in Figur 5 gezeigten Multikupplung in einer Ansicht von oben;
- Figur 13: eine weitere Ausführung des in Figur 5 gezeigten ersten Kupplungsglieds; und
- Figur 14: ein Schienenfahrzeug hier vorgeschlagener Art.

Gleiche Bezugszeichen bezeichnen wiederkehrende Merkmale.

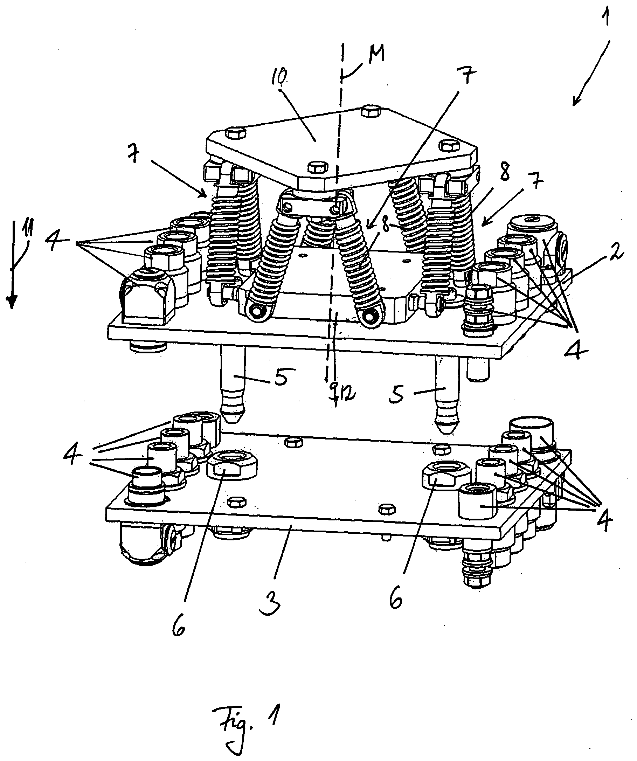

In Figur 1 ist eine Multikupplung 1 hier vorgeschlagener Art schematisch dargestellt. Sie umfasst eine erste Anschlussplatte und eine zweite Anschlussplatte, die jeweils zehn zueinander kongruente Anschlusselemente aufweist zum Übertragen von optischer und elektrischer Signale, hydraulischer und pneumatischer Medien (Druckluft, Öl, Bremsflüssigkeit), einer Kühlflüssigkeit sowie elektrischer Leistungsspannungen. Die beiden Anschlussträger weisen ferner Verbindungselemente auf für eine mechanische form- und kraftschlüssige Verbindung zwischen den beiden Anschlussträgern in Form von zwei Verbindungszapfen 5 und zweier zugehöriger Aufnahmen 6.

Der erste Anschlussträger weist ferner vier Federmodule 7 auf, die jeweils zwei gegeneinander verkippte Federelemente 8 umfassen. Ein erstes Ende 9 der Federmodule 7 ist durch eine gemeinsame erste Kupplungsplatte 9 gegeben, die mit dem ersten Anschlussträger 2 verschraubt ist. Ein zweites Ende 10 der Federmodule 7 ist durch eine zweite gemeinsame Kupplungsplatte 10 gegeben. Diese zweite Kupplungsplatte 10 dient als Verbindungselement zum Verbinden der Multikupplung 1 mit einem Kupplungsglied eines Kupplungssystems (hier nicht abgebildet).

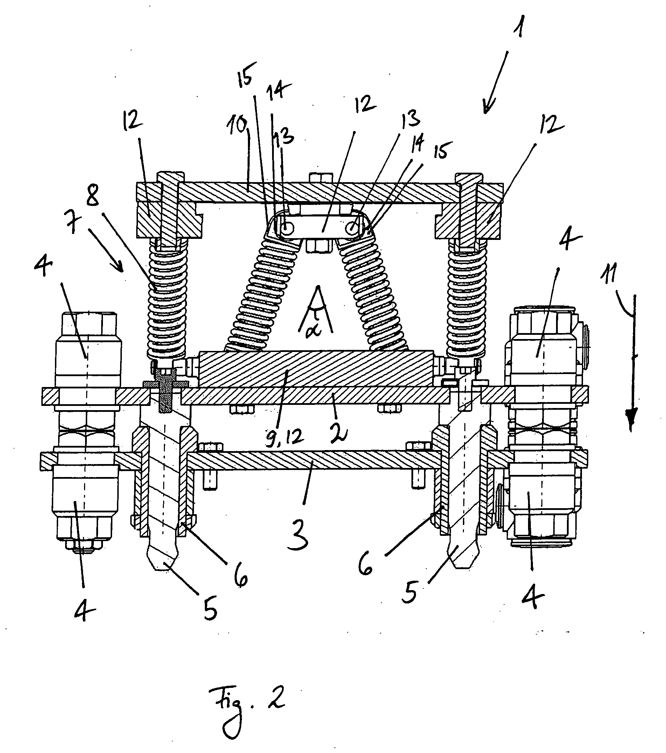

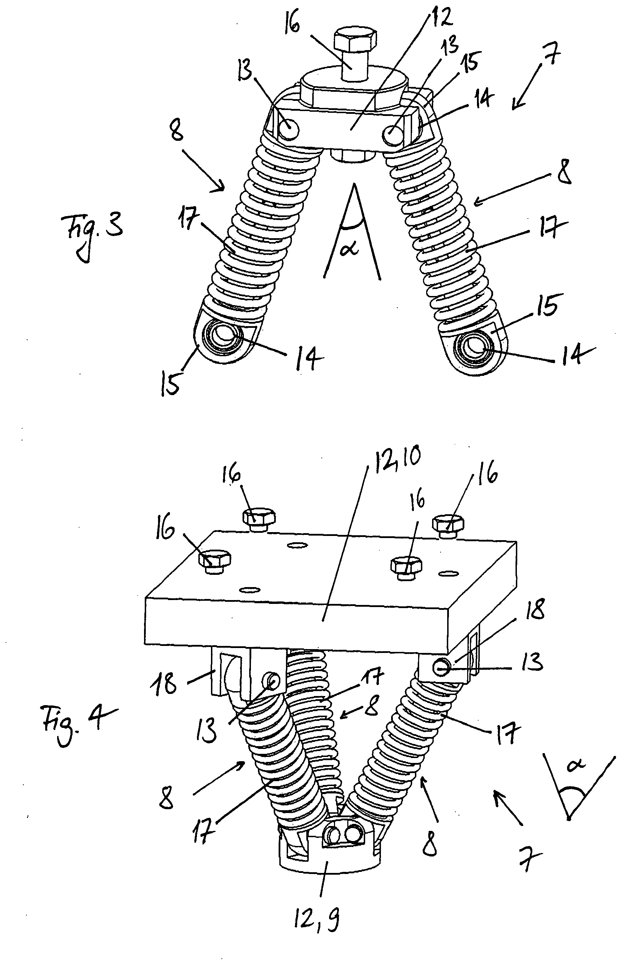

Die beiden Enden 9, 10 der Federmodul 7 sind entlang einer bevorzugten Fügerichtung 11 der Multikupplung 1 gegeneinander versetzt, ferner sind somit auch der erste Anschlussträger 2 und die zweite Kupplungsplatte in dieser Fügerichtung 11 voneinander beabstandet. Auf diese Weise werden Relativbewegungen zwischen dem ersten Anschlussträger 2 und der zweiten Kupplungsplatte 10 (bzw. einem damit verbundenen Kupplungsglied) parallel und senkrecht zu dieser Fügerichtung 11 und Rückstellkräfte parallel und senkrecht zu dieser Fügerichtung 11 ermöglicht. Außerdem ist der erste Anschlussträger 2 gegenüber der zweiten Kupplungsplatte 10 um beliebige Achsen drehbar und kippbar. Durch die paarweise V-förmige Ausrichtung der Federelemente 8 zueinander und ist sichergestellt, dass bei jeder dieser Relativbewegungen eine ausreichend starke Rückstellkraft bzw. hinreichend starkes Drehmoment in Richtung der gezeigten Gleichgewichtslage zwischen der zweiten Kupplungsplatte 10 und der ersten Anschlussplatte 2 erzeugt wird. Dabei beträgt ein Kippwinkel α zwischen je zwei Federelementen in ihrer Ruhelage, d.h. in einer kräftefreien Gleichgewichtslage, etwa 40°, vgl. auch Figuren 2 und 3.

Beispielsweise werden bei einer Drehung des Anschlussträgers um eine zur Fügerichtung 11 parallelen Drehachsen vier der acht Federelemente 8 gestaucht und die restlichen Federelemente im gleichen Maße gedehnt. Wären alle senkrecht zu dieser Drehachse ausgerichtet, würden sie bei einer entsprechenden Drehung um ein geringeres Maß gedehnt werden, so dass insgesamt ein geringeres rückstellendes Drehmoment erzeugt werden würde. Das Gleiche gilt für Verschiebungen senkrecht zur Fügerichtung 11.

Die bevorzugte Fügerichtung 11 ist durch die Ausrichtung der Anschlusselemente 4 an dem ersten Anschlussträger 2 und die Verbindungszapfen 5 vorgegeben.

Die Federmoduls sind außerdem um eine zentrale Mittelachse M herum angeordnet und weisen in Umlaufrichtung um diese Mittelachse gleiche Abstände voneinander auf zur Vergleichmäßigung von auf den ersten Anschlussträger 2 übertragener Rückstellkräfte und Drehmomente.

In Figur 2 ist zur weiteren Verdeutlichung ein Querschnitt durch die in Figur 1 gezeigte Multikupplung 1 schamtisch dargestellt, wobei die Schnittebene parallel zu der bevorzugten Fügerichtung 11 der Multikupplung 1 verläuft. Zu erkennen sind insbesondere Pendelglieder 12, welche jeweils die beiden Federelemente 8 eines der Federmodule 7 mit der zweiten Kupplungsplatte 10 verbinden. Zu diesem Zweck weisen die Pendelglieder 12 jeweils zwei Verbindungsachsen 13 auf, die in komplementären Achslagern 14 der Federelement 8 gelagert sind. Dabei sind die Achslager ihrerseits in Endstücken 15 der Federelemente 8 integriert. Auf diese Weise sind die Federelemente 8 um diese Verbindungsachsen 13 kippbar. Die Pendelglieder 12 sind mit der ersten Kupplungsplatte mittels Schrauben 16 verbunden.

Die erste Kupplungsplatte 9, welche mit dem ersten anschlussträger verschraubt ist, weist entsprechende Verbindungsachsen 13 auf, welche ebenfalls in Achslagern 14 (vgl. Figur 3) der Federelemente 8 gelagert sind.

In Figur 3 ist eines der Federmodule 7 der in Figur 1 gezeigten Multikupplung 1 schematisch dargestellt (ohne Kupplungsplatten 9, 10). Die beiden Federelemente 8 weisen Spiralfedern 17 auf, welche aber genauso gut auch Gasdruckfedern ersetzt werden könnten. Jedes der Federelemente hat zwei Endstücke 15 mit jeweils einem Achslager 14 zur Aufnahme einer der Verbindungsachsen 13. Es ist ferner eines der Pendelglieder 12 gezeigt, welches Halteelemente 18 für zwei Verbindungsachsen 13 aufweist.

In Figur 4 ist eine alternative Ausführungsform eines Federmoduls hier vorgeschlagener Art gezeigt mit drei Federelementen. Durch die paarweise V-förmige Ausrichtung der Federelemente 8 können mit diesem Federmodul 7 sowohl Rückstellkräfte in alle drei Raumrichtungen sowie besonders gut auch Drehmomente um beliebige Drehachsen übertragen werden. Dabei schließen die Federelemente 8 paarweise einen Kippwinkel α von etwa 60° zwischen sich ein.

Somit ließen sich die vier Federmodule 7 der in Figur 1 gezeigten Multikupplung 1 durch dieses Federmodul ersetzen. Dadurch ließe sich ein kompakterer Aufbau erzielen und ein Wartungsarbeiten (Austausch der Federelemente 8) vereinfacht werden, da hierfür weniger Verschraubungen 16 zu lösen sind. Vorzugsweise würde dieses Federmodul zentral in die in Figur 1 eingezeichnete Mittelachse M angeordnet werden.

Die beiden Enden 9, 10 des Federmoduls sind durch Pendelglieder gegeben, die Achshalter 18 für Verbindungsachse 13 aufweisen. Diese Verbindungsachsen 13 sind wie zuvor beschrieben mit den Federelementen 8 verbunden.

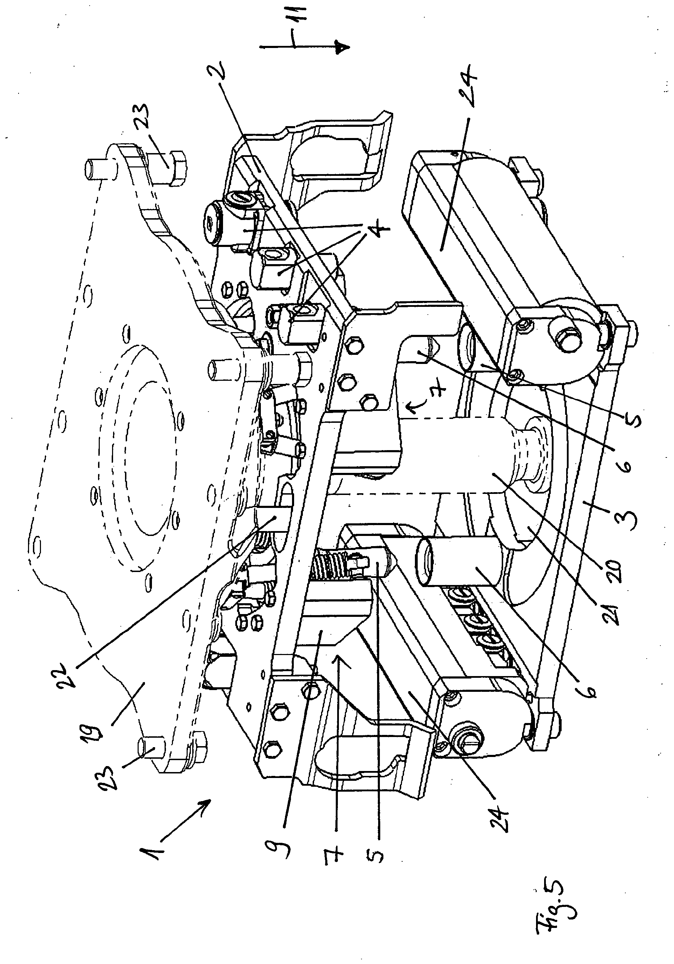

In Figur 5 ist eine weitere Multikupplung 1 hier vorgeschlagener Art schematisch dargestellt. Die gezeigte Multikupplung weist einen ersten Anschlussträger 2 auf, der mittels vier Federmodule 7 mit einem ersten Kupplungsglied 19 verbunden ist. Dabei ist der erste Anschlussträger von dem ersten Kupplungsglied 19 in einer bevorzugten Fügerichtung 11 des ersten Anschlussträgers 2 beabstandet zur Ermöglichung von Ausgleichsbewegungen entlang und quer zu dieser Fügerichtung 11. Auf dem ersten Anschlussträger 2 sind Anschlussbuchsen 4 sowie zwei zapfenförmig ausgestaltete Befestigungselemente 5 zum angeordnet.

Die Multikupplung 1 umfasst ferner einen zweiten Anschlussträger 3 mit Anschlusselementen (hier nicht sichtbar), die komplementär zu den Anschlusselementen 4 des ersten Anschlussträgers angeordnet und ausgestaltet sind zur Medien-, Signal- und Energieübertragung. Der zweite Anschlussträger 3 umfasst ferner Aufnahmen 6 für die Befestigungselemente 5.

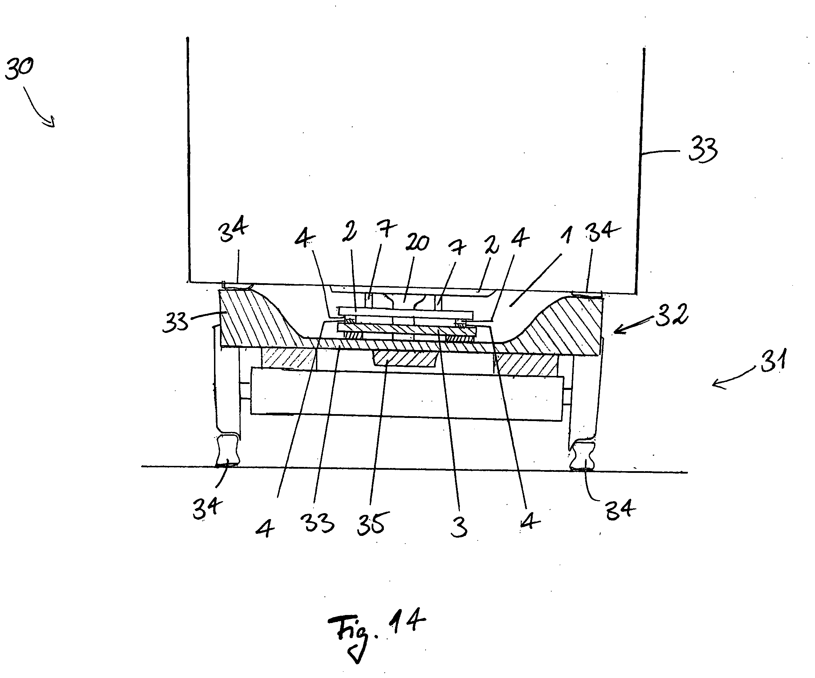

Das erste Kupplungsglied 19 weist einen Drehzapfen 20 als Verbindungselement auf. Dieser Drehzapfen durchläuft die beiden Anschlussträger 2, 3 durch zentrale Durchtrittsöffnungen 21. Die gezeigte Anordnung eignet sich insbesondere zur Verkupplung eines Drehgestells mit einem Wagenaufbau eines Schienenfahrzeugs, vgl. Figur 14.

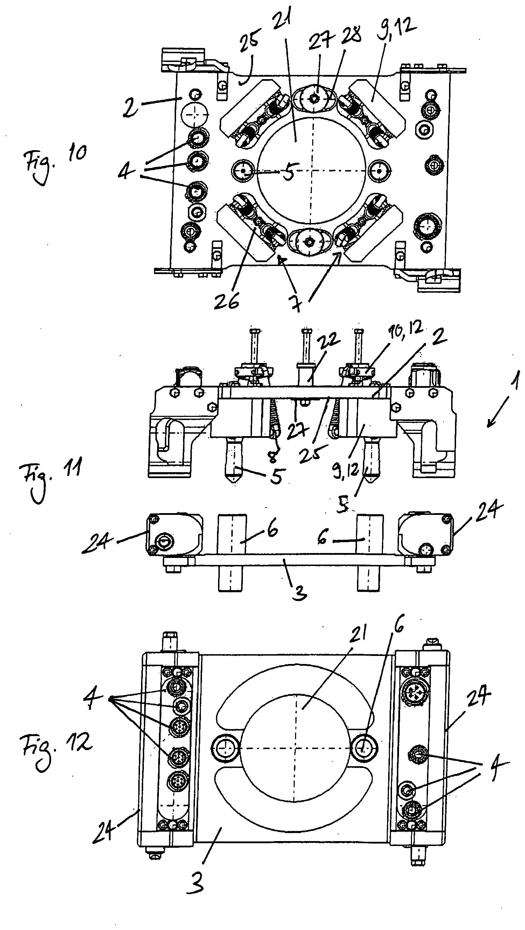

Das erste Kupplungsglied 19 weist außerdem zapfenförmige Sicherungselemente 22 auf, welche mit einem Ende durch den ersten Anschlussträger 2 hindurchgeführt sind und verbreiterte Endstücke (hier nicht sichtbar) aufweisen, vgl. Figur 10. Durch die Sicherungselemente 22 wird auf diese Weise ein Abfallen des ersten Anschlussträgers 2 von dem ersten Kupplungsglied 19 verhindert.

An dem ersten Kupplungsglied sind ferner als Verbindungsstifte ausgeführte Verbindungselemente 23 vorgesehen, etwa zum Verbinden des Kupplungsglieds 19 mit einem Wagenaufbau eines Schienenfahrzeugs, vgl. Figur 14.

Der zweite Anschlussträger 3 weist ferner eine drehbare Schutzklappen 24 auf, welche die Anschlusselemente verdeckt, falls, wie hier, keine Verbindung mit dem ersten Anschlussträger 2 besteht.

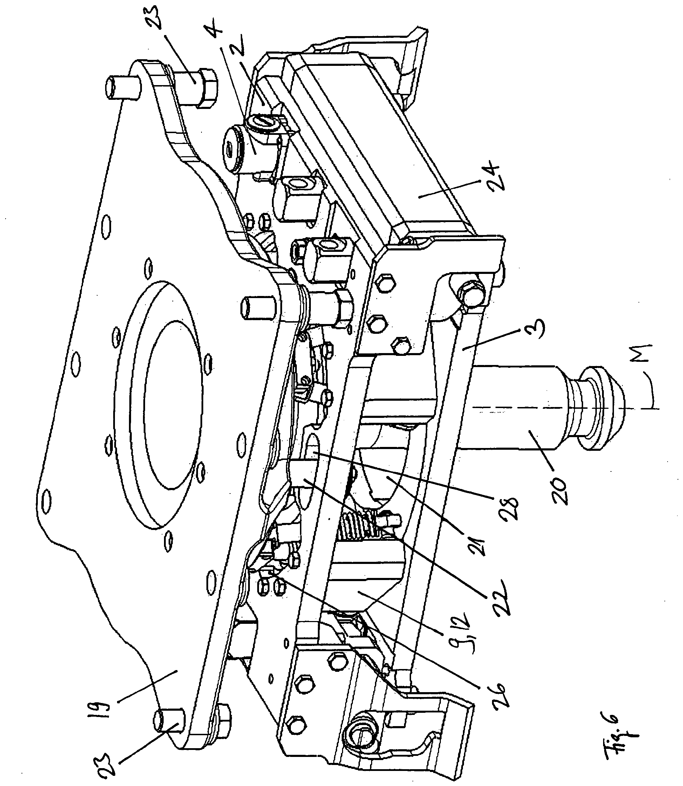

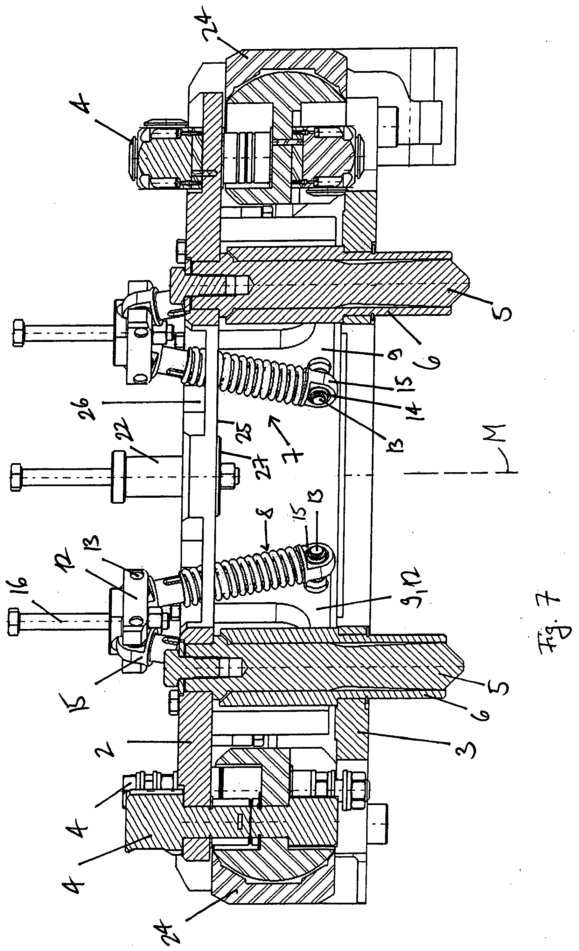

In Figuren 6 und 7 ist die in Figur 5 gezeigte Multikupplung in einem verbundenen Zustand schematisch dargestellt, in dem sich die Anschlusselemente 4 in einem gegenseitigen Eingriff befinden ebenso wie die Befestigungselemente 5 und 6. Dabei zeigt Figur 7 einen Querschnitt durch die Multikupplung 1 entlang der bevorzugten Fügerichtung 11 (ohne das Kupplungsglied). Ferner ist zu erkennen, dass die Schutzkappen 24 nun aufgeklappt sind.

Die vier Federmodule 7 umfassen jeweils ein Paar von Federelementen 8, die V-förmig zueinander ausgerichtet sind. Sie schließen in diesem Beispiel paarweise einen Kippwinkel von etwa 45° ein. Es sind vier derartige Federungsmodule 16 vorgesehen, die regelmäßig um eine Mittelachse M der Multikupplung, welche durch zentral durch die Durchgangsöffnung 21 in dem ersten Anschlussträger hindurchläuft, herum angeordnet sind, wobei jeweils zwei der vier Federmodule 8 an zwei einander gegenüberliegenden Seiten der Durchgangsöffnung 21 angeordnet sind.

Die insgesamt acht Federelemente 8 sind durch den ersten Anschlussträger 2 hindurchgeführt und über blockförmige Enden (Pendelglieder) 9, 12 der Federmodule 7 mit einer Unterseite 25 des ersten Anschlussträgers 5 verbunden.

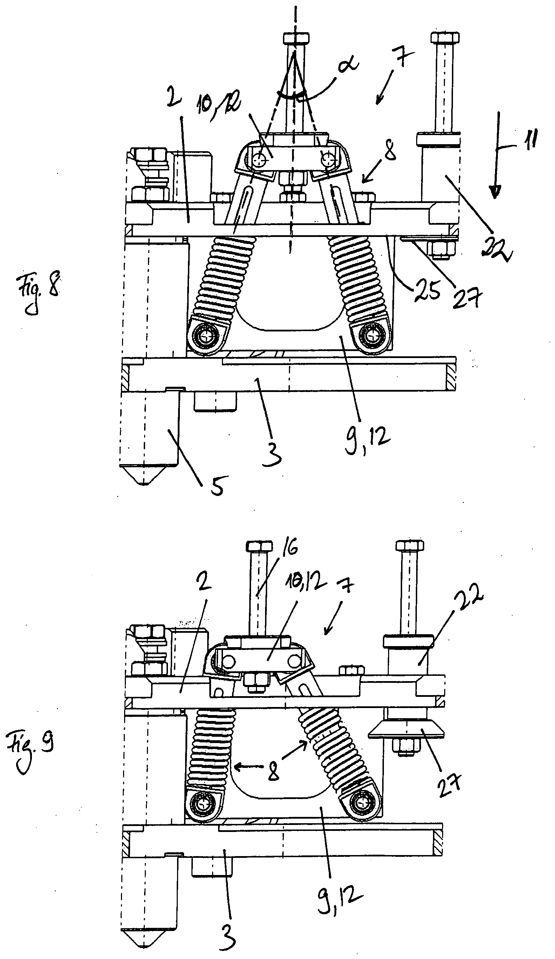

In Figur 8 und 9 sind weitere Ansichten auf eines der Federmodule 7 der anhand Figur 5 beschriebenen Multikupplung 1 gezeigt (ohne erstes Kupplungsglied). Während in Figur 8 die Gleichgewichtslage des Federmoduls 7 gezeigt ist, ist in Figur 9 das obere, erste Ende 9, 12 des Federmoduls nach links aus diese Gleichgewichtslage herausgeschoben, wodurch das linke der beiden Federelemente 8 gestaucht und das rechte Federelement 8 gedehnt ist, so das durch die beiden Federelemente eine Rückstellkraft in Richtung der in Figur 8 gezeigten Gleichgewichtslage erzeugt wird.

In Figur 10 ist der erste Anschlussträger 2 der in Figur 5 gezeigten Multikupplung 1 in einer Ansicht von unten auf die Unterseite 25 des ersten Anschlussträgers 2 schematisch dargestellt. In der Mitte des Anschlussträgers 2 ist die Durchgangsöffnung 21 vorgesehen zum Durchführen des Drehzapfens 20 des Kupplungsgliedes 19 (siehe Figur 5) durch die Durchgangsöffnung 21. Um diese Durchgangsöffnung 21 herum sind die vier Federmodule 7 so angeordnet, dass jeweils ein Paar dieser Federmodule 7 auf zwei einander gegenüberliegenden Seiten der Durchgangsöffnung 21 angeordnet sind für eine möglichst gleichmäßige Kraftübertragung auf den Anschlussträger 2. Die hier sichtbaren unteren zweiten Enden 10 der Federmodule 7 sind mit der Unterseite 25 des Anschlussträgers 2 verschraubt. Die Federelemente 8 sind durch Durchgangslöcher in dem ersten Anschlussträger 2 durch diesen hindurchgeführt.

Außerdem sind die verbreiterten Endstücke 27 der Sicherungselemente 22 dargestellt, die durch Durchtrittsöffnungen 28 in dem gezeigten Anschlussträger 2 hindurchgeführt sind.

In Figur 11 sind die beiden Anschlussträger 2, 3 der in Figur 5 gezeigten Multikupplung 1 in einer Ansicht von der Seite schematisch dargestellt.

Auf der Unterseite 25 des ersten Anschlussträgers 5 sind ferner zwei Verbindungselemente (Verbindungszapfen) 5 vorgesehen, welche einer besonders sicheren und starre Verbindung des ersten Anschlussträgers 2 mit dem zweiten Anschlussträger 3, welcher entsprechende Aufnahmen 6 aufweist, siehe Figur 5. Diese Verbindungselemente 5, 5 sind aufgrund des sich verjüngender den Endes der Zapfen 5 und der sich trichterförmig aufweitenden Aufnahmen 6 (vgl. Figur 7) gleichzeitig auch Führungselemente für ein passgenaues Zusammenführen und sicheres Verbinden der beiden Anschlussträger 2 und 3.

Figur 12 zeigt eine weitere Darstellung des in Figur 5 gezeigten zweiten Anschlussträgers 3 in einer Ansicht von oben, wobei die Schutzabdeckungen 24 aufgeklappt sind. Der Anschlussträger 3 weist eine Durchgangsöffnung 21 zum Durchführen des Drehzapfens 20 durch den plattenförmigen zweiten Anschlussträger 3 hindurch.

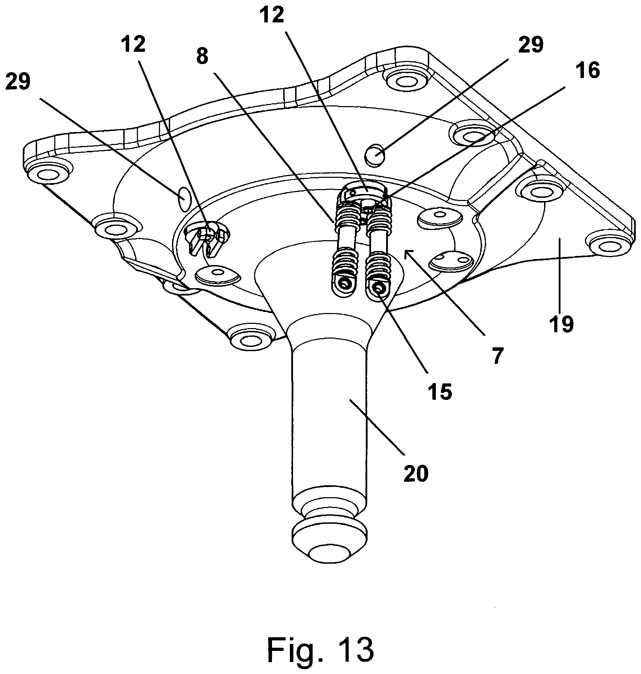

In Figur 13 ist das in Figur 5 gezeigte Kupplungsglied 19 in einer Ansicht von schräg unten schematisch dargestellt. Ferner ist ein Paar von Federelementen 8 eines der Federmodule 7 der in Figur 5 gezeigten Multikupplung 1 dargestellt, wie auch in Figur 3 gezeigt. Im Unterschied zu dem in Figur 3 gezeigten Ausführungsbeispiel des Federmoduls weist das Pendelglied 12 zwei Schrauben 16 auf. Diese sind in einen korrespondierenden und in das Kupplungsglied 19 eingeschobenen, zylinderförmigen Gewindeträger 37 verschraubt. Auf diese Weise ist eine leicht lösbare Verbindung zwischen dem Federmodul 7 und dem Kupplungsglied 19 hergestellt für eine leichte und einfache Auswechselbarkeit der Federelemente 8.

In Figur 14 ist ein Schienenfahrzeug 30 hier vorgeschlagener Art mit einem Drehgestell 31 hier vorgeschlagener Art in einer Ansicht von vorne schematisch dargestellt. Das Drehgestell 31 umfasst ein Kupplungssystem 32 hier vorgeschlagener Art mit der anhand von Figuren 5 bis 12 beschriebenen Multikupplung 1. Das Kupplungssystem 32 umfasst außerdem das in Figuren 5 und 6 gezeigte erste Kupplungsglied 19, das mit dem ersten Anschlussträger über die Federmodule 7 verbunden ist, sowie ein zweites Kupplungsglied 33, das auf einer oberen Seite mit dem zweiten Anschlussträger 3 und mit einer unteren Seite mit dem Drehgestell 31 verbunden ist.

Auf das Drehgestell 31 ist ein Wagenkasten 33 (Wagenaufbau) eines Passagierwaggons aufgesetzt, wobei das Drehgestell 31 selbst auf einem Paar von Schienen 34 aufgesetzt ist. Die Gewichtskraft des Wagenkastens 33 wird über Gleitplatten 34 auf das Drehgestell 31 übertragen, wohingegen im Wesentlichen senkrecht zu Gewichtskraft ausgerichtete Kräfte, wie beispielsweise Antriebskräfte und seitliche Lenkkräfte, über den Drehzapfen 20 und ein als Drehzapfenaufnahme 35 ausgestaltetes und am zweiten Kupplungsglied 33 angeordneten zweites Verbindungselement 35 übertragen werden. Der Drehzapfen 20 ist beweglich in der Drehzapfenaufnahme 35 gelagert, so dass Relativbewegungen zwischen dem Wagenaufbau 33 und dem Drehgestell 31, insbesondere Drehbewegungen des Wagenaufbaus 33 relativ zum Drehgestell 31, ermöglicht werden, etwa für eine Kurvenfahrt des Schienenfahrzeugs 30.

Da der erste Anschlussträger 2 mit dem zweiten Anschlussträger 3 starr verbunden ist und dieser wiederum mit dem zweiten Kupplungsglied 33 fest verbunden ist, führt der erste Anschlussträger 2, der über die Federungsmodule 7 mit dem ersten Kupplungsglied 19 beweglich verbunden ist, entsprechende Ausgleichsbewegungen relativ zum ersten Kupplungsglied 19, das fest mit dem Wagenaufbau 33 verbunden ist, aus, sobald der Wagenaufbau 33 sich relativ zum Drehgestell 31 bewegt. Somit werden Relativbewegungen zwischen dem Wagenaufbau 33 und dem Drehgestell 31 mittels der Federungsmodule 7 durch entsprechende Ausgleichsbewegungen kompensiert, so dass die Verbindung zwischen den Anschlusselementen 4 der beiden Anschlussträger 2, 3 erhalten wird.

Dabei erlauben die Federungsmodule 7 und die voneinander beabstandete Anordnung des ersten Anschlussträgers 5 von dem ersten Kupplungsglied 19 Ausgleichsbewegungen des ersten Anschlussträgers 2 relativ zum ersten Kupplungsglied 19 in alle drei Raumdimensionen, insbesondere auch Drehbewegungen des ersten Anschlussträgers 2 um eine Längsachse des Drehzapfens 20, Kippbewegungen um die Längsachse des Drehzapfens 20 sowie Verschiebungen längs und quer zu der Längsachse des Drehzapfens 4.

Ferner werden die Anschlusselemente 4 der beiden Anschlussträger 2, 3 durch die Federungsmodule 7 permanent aufeinander gedrückt.

Zu den Anschlusselemente 4 gehören insbesondere zwei Pneumatikkupplungen für zwei pneumatische Gleitschutzvorrichtungen des Drehgestells 31, zwei Erdungskontakte, eine weitere Pneumatikkupplung für einen Hubzylinder des Drehgestells 31, ferner ein Anschlusselement 4 zur Übertragung von Bremsflüssigkeit an ein Bremssystem des Drehgestells 31, ein 6-poliger Stromstecker zur Systemabfrage einer elektronischen Systemüberwachungseinheit und eine 6-polige Anschlussbuchse für ein elektronisches System zur Überwachung einer Temperatur eines Achslagers des Drehgestells 31.

### Bezugszeichenliste:

- 1: Multikupplung
- 2: erster Anschlussträger
- 3: zweiter Anschlussträger
- 4: Anschlusselemente
- 5: Verbindungszapfen
- 6: Aufnahme für Verbindungszapfen
- 7: Federmodul
- 8: Federelement
- 9: erstes Ende eines Federmoduls, erste Kupplungsplatte
- 10: zweites Ende eines Federmoduls, zweite Kupplungsplatte
- 11: bevorzugte Fügerichtung
- 12: Pendelglied
- 13: Verbindungsachse
- 14: Achslager
- 15: Endstück eines Federelements
- 16: Verschraubung
- 17: Spiralfeder
- 18: Achshalter
- 19: erstes Kupplungsglied
- 20: Verbindungselement (Drehzapfen) an Kupplungsglied
- 21: Durchtrittsöffnung in Anschlussträger
- 22: Sicherungselement
- 23: Befestigungselement an Kupplungsglied
- 24: Schutzabdeckung für Anschlusselemente
- 25: Unterseite des ersten Anschlussträgers
- 26: Durchgangslöcher für Federelement
- 27: Endstück des Sicherungselement
- 28: Durchgangsloch für Sicherungselement
- 29: Gewindeträger
- 30: Schienenfahrzeug
- 31: Drehgestell
- 32: Kupplungssystem
- 33: Wagenaufbau
- 34: Schiene
- 33: zweites Kupplungsglied
- 34: Gleitplatten
- 35: zweites Verbindungselement
- M: Mittelachse der Multikupplung
- α: Kippwinkel zwischen Federelementen eines Federmoduls

## Patentansprüche

1. Multikupplung (1), umfassend einen ersten Anschlussträger (2) mit mindestens einem ersten Anschlusselement (4) und einen zweiten Anschlussträger (3) mit mindestens einem zweiten Anschlusselement (4), wobei das erste Anschlusselement (4) und das zweite Anschlusselement (4) komplementär zueinander ausgestaltet sind zur Medien-, Energie- und/oder Signalübertragung, wobei der erste Anschlussträger (2) mindestens ein Federmodul (7) aufweist zum 3-dimensionalen Toleranzausgleich zwischen dem ersten Anschlussträger (2) und einem Kupplungsglied (19) eines Kupplungssystems (32),
**dadurch gekennzeichnet,**
**dass** das Federmodul (7) mindestens zwei gegeneinander verkippte Federelemente (8) aufweist, wobei das Federmodul (7) mit einem ersten Ende (9) an dem ersten Anschlussträger (2) befestigt ist und zur Verbindung mit dem Kupplungsglied (19) ein zweites Ende (10) aufweist, das gegenüber dem ersten Ende (10) parallel zu einer bevorzugten Fügerichtung (11) versetzt ist für einen Toleranzausgleich parallel zu dieser Fügerichtung (11).

2. Multikupplung (1) nach einem der vorangehenden Ansprüche, **dadurch gekennzeichnet, dass** die Federelemente (8) ausgerichtet sind mit Richtungskomponenten parallel zu einer bevorzugten Fügerichtung (11) der Multikupplung (1).

3. Multikupplung (1) nach einem der vorangehenden Ansprüche, **dadurch gekennzeichnet, dass** die Federelemente (8) des Federmoduls (7) in einer Ruhelage um einen Kippwinkel (α) zwischen 20° und 160° gegeneinander verkippt sind.

4. Multikupplung (1) nach einem der vorangehenden Ansprüche, **dadurch gekennzeichnet, dass** das Federmodul (7) ein Pendelglied (12) umfasst, das an Endstücken (15) der Federelemente (8) befestigt ist.

5. Multikupplung (1) nach einem der vorangehenden Ansprüche, **dadurch gekennzeichnet, dass** die Federelemente (8) Endstücke (15) aufweisen mit Achslagern (14) für Verbindungsachsen (13).

6. Multikupplung (1) nach einem der vorangehenden Ansprüche, **dadurch gekennzeichnet, dass** das Federmodul (7) mindestens drei Federelemente (8) aufweist.

7. Multikupplung (1) nach einem der vorausgehenden Ansprüche, **dadurch gekennzeichnet, dass** die Federelemente (8) des Federmoduls (7) den ersten Anschlussträger (2) durch eine Durchtrittsöff-nung (26) in dem ersten Anschlussträger (2) durchlaufen.

8. Multikupplung (1) nach einem der vorausgehenden Ansprüche, **dadurch gekennzeichnet, dass** die Multikupplung (1) mehrere Federmodule (7) aufweist, die um eine Mittelachse (M) des ersten Anschlussträgers (2) herum angeordnet sind und vorzugsweise in einer Umlaufrichtung um diese Mittelachse gleichmäßig voneinander beabstandet sind.

9. Multikupplung (1) nach einem der vorangehenden Ansprüche, **dadurch gekennzeichnet, dass** der erste Anschlussträger (2) eine Durchtrittsöffnung (21) aufweist zum Durchführen eines Verbindungselements (20) des Kupplungssystems (32) durch den ersten Anschlussträger (2).

10. Multikupplung (1) nach einen der vorausgehenden Ansprüche, **dadurch gekennzeichnet, dass** die beiden Anschlussträger (2, 3) zueinander komplementäre Befestigungselemente (5, 6) aufweisen zum Herstellen einer formschlüssigen und/oder kraftschlüssigen Verbindung zwischen den beiden Anschlussträgern (2, 3).

11. Multikupplung (1) nach einem der vorangehenden Ansprüche, **dadurch gekennzeichnet, dass** das Federmodul (7) an einem dem ersten Anschlussträger (2) abgewandten Ende (10) eine Kupplungsplatte (10) aufweist.

12. Kupplungssystem (32), umfassend ein erstes Kupplungsglied (19) mit mindestens einem ersten Verbindungselement (20) und ein zweites Kupplungsglied (33) mit mindestens einem zweiten Verbindungselement (35) zum Herstellen einer lösbaren Verbindung zwischen den beiden Kupplungsgliedern (19, 33), wobei das Kupplungssystem (32) eine Multikupplung (1) nach einem der vorangehenden Ansprüche umfasst und der erste Anschlussträger (2) der Multikupplung (1) über das Federmodul (7) mit dem ersten Kupplungsglied (19) verbunden ist für einen 3-dimensionalen Toleranzausgleich zwischen dem ersten Anschlussträger (2) und dem ersten Kupplungsglied (19), wobei außerdem der zweite Anschlussträger (3) mit dem zweiten Kupplungsglied (33) verbunden ist.

13. Kupplungssystem (32) aus Anspruch 12, **dadurch gekennzeichnet, dass** das erste Kupplungsglied (19) und der erste Anschlussträger (2) in einer bevorzugten Fügerichtung (11) des Kupplungssystems (32) voneinander beabstandet angeordnet sind.

14. Kupplungssystem (32) nach einem der Ansprüche 12 oder 13, **dadurch gekennzeichnet, dass** das zweite Verbindungselement (35) als ein Lager für das erste Verbindungselement (19) ausgestaltet ist oder dass das erste Verbindungselement (19) als ein Lager für das zweite Verbindungselement (35) ausgestaltet ist für eine bewegliche Verbindung zwischen den beiden Kupplungsgliedern (19, 33).

## Claims

1. A multi-coupling (1), comprising a first connection carrier (2) with at least one first connection element (4), and a second connection carrier (4) with at least one second connection element (4), wherein the first connection element (4) and the second connection element (4) are designed complementarily to one another for media transmission, energy transmission and/or signal transmission, wherein the first connection carrier (2) comprises at least one spring module (7) for the 3-dimensional tolerance compensation between the first connection carrier (2) and a coupling member (19) of a coupling system (32),
**characterised in that**
the spring module (7) comprises at least two spring elements (8) which are tilted to one another, wherein the spring module (7) is fastened with a first end (9) to the first connection carrier (2) and for connection to the coupling member (19) comprises a second end (10) which is offset with respect to the first end (10) in a manner parallel to a preferred joining direction (11) for a tolerance compensation parallel to this joining direction (11).

2. A multi-coupling (1) according to one of the preceding claims, **characterised in that** the spring elements (8) are aligned with direction components parallel to a preferred joining direction (11) of the multi-coupling (1).

3. A multi-coupling (1) according to one of the preceding claims, **characterised in that** the spring elements (8) of the spring module (7) in an idle position are tilted to one another by a tilt angle (α) between 20° and 160°.

4. A multi-coupling (1) according to one of the preceding claims, **characterised in that** the spring module (7) comprises a pendulum member (12) which is fastened to end-pieces (15) of the spring elements (8).

5. A multi-coupling (1) according to one of the preceding claims, **characterised in that** the spring elements (8) comprise end-pieces (15) with axle bearings (14) for connection axes (13).

6. A multi-coupling (1) according to one of the preceding claims, **characterised in that** the spring module (7) comprises at least three spring elements (8).

7. A multi-coupling (1) according to one of the preceding claims, **characterised in that** the spring elements (8) of the spring module (7) run through the first connection carrier (2) through a through-opening (26) in the first connection carrier (2).

8. A multi-coupling (1) according to one of the preceding claims, **characterised in that** the multi-coupling (1) comprises several spring modules (7) which are arranged around a middle axis (M) of the first connection carrier (2) and are preferably uniformly distanced to one another in a peripheral direction about this middle axis.

9. A multi-coupling (1) according to one of the preceding claims, **characterised in that** the first connection carrier (2) comprises a through-opening (21) for leading a connection element (20) of the coupling system (32) through the first connection carrier (2).

10. A multi-coupling (1) according to one of the preceding claims, **characterised in that** the two connection carriers (2, 3) comprise fastening elements (5, 6) which are complementary to one another for creating a positive and/or non-positive connection between the two connection carriers (2, 3).

11. A multi-coupling (1) according to one of the preceding claims, **characterised in that** the spring module (7) at an end (10) which is away from the first connection carrier (2) comprises a coupling plate (10).

12. A coupling system (32) comprising a first coupling member (19) with at least one first connection element (20), and a second coupling member (33) with at least one second connection element (32), for creating a releasable connection between the two coupling members (19, 33), wherein the coupling system (32) comprises a multi-coupling (1) according to one of the preceding claims, and the first connection carrier (2) of the multi-coupling (1) is connected via the spring module (7) to the first coupling member (19) for a 3-dimensional tolerance compensation between the first connection carrier (2) and the first coupling member (19), wherein furthermore the second connection carrier (3) is connected to the second coupling member (33).

13. A coupling system (32) from claim 12, **characterised in that** the first coupling member (19) and the first connection carrier (2) are arranged distanced to one another in a preferred joining direction (11) of the coupling system (32).

14. A coupling system (32) according to one of the claims 12 or 13, **characterised in that** the second connection element (35) is designed as a bearing for the first connection element (19) or that the first connection element (19) is designed as a bearing for the second connection element (35), for a movable connection between the two coupling members (19, 33).

## Revendications

1. Couplage multiple (1), comprenant un premier support de connexion (2) doté d'au moins un premier élément de connexion (4) et un deuxième support de connexion (3) doté d'au moins un deuxième élément de connexion (4), le premier élément de connexion (4) et le deuxième élément de connexion (4) étant conçus complémentaires l'un à l'autre pour la transmission de médias, d'énergie et/ou de signaux, le premier support de connexion (2) présentant au moins un module à ressort (7) pour une compensation des tolérances tridimensionnelles entre le premier support de connexion (2) et un élément de couplage (19) d'un système de couplages (32),
**caractérisé en ce**
**que** le module à ressort (7) présente au moins deux éléments de ressort (8) basculés l'un par rapport à l'autre, le module à ressort (7) étant fixé avec une première extrémité (9) sur le premier support de connexion (2) et présentant une seconde extrémité (10) pour la liaison avec l'élément de couplage (19), qui est décalée par rapport à la première extrémité (10) de manière parallèle à une direction d'assemblage (11) préférée pour une compensation des tolérances parallèle à cette direction d'assemblage (11).

2. Couplage multiple (1) selon l'une des revendications précédentes, **caractérisé en ce que** les éléments de ressort (8) sont orientés avec des composantes directionnelles parallèles à une direction d'assemblage (11) préférée du couplage multiple (1).

3. Couplage multiple (1) selon l'une des revendications précédentes, **caractérisé en ce que** les éléments de ressort (8) du module à ressort (7) sont basculés les uns par rapport aux autres avec un angle de basculement (α) entre 20° et 160° dans une position de repos.

4. Couplage multiple (1) selon l'une des revendications précédentes, **caractérisé en ce que** le module à ressort (7) comprend un élément pendulaire (12) qui est fixé à des parties d'extrémité (15) des éléments de ressort (8).

5. Couplage multiple (1) selon l'une des revendications précédentes, **caractérisé en ce que** les éléments de ressort (8) présentent des parties d'extrémité (15) avec des paliers d'axe (14) pour des axes de liaison (13).

6. Couplage multiple (1) selon l'une des revendications précédentes, **caractérisé en ce que** le module à ressort (7) présente au moins trois éléments de ressort (8).

7. Couplage multiple (1) selon l'une des revendications précédentes, **caractérisé en ce que** les éléments de ressort (8) du module à ressort (7) traversent le premier support de connexion (2) par un orifice de passage (26) dans le premier support de connexion (2).

8. Couplage multiple (1) selon l'une des revendications précédentes, **caractérisé en ce que** le couplage multiple (1) présente plusieurs modules à ressort (7) qui sont disposés autour d'un axe central (M) du premier support de connexion (2) et sont de préférence espacés de manière régulière les uns des autres dans une direction circonférentielle autour de cet axe central.

9. Couplage multiple (1) selon l'une des revendications précédentes, **caractérisé en ce que** le premier support de connexion (2) présente un orifice de passage (21) pour le passage d'un élément de liaison (20) du système de couplages (32) à travers le premier support de connexion (2).

10. Couplage multiple (1) selon l'une des revendications précédentes, **caractérisé en ce que** les deux supports de connexion (2, 3) présentent des éléments de fixation (5, 6) complémentaires l'un à l'autre pour l'établissement d'une liaison par complémentarité des formes et/ou par complémentarité des matières entre les deux supports de connexion (2, 3).

11. Couplage multiple (1) selon l'une des revendications précédentes, **caractérisé en ce que** le module à ressort (7) présente une plaque de couplage (10) au niveau d'une extrémité (10) opposée au premier support de connexion (2).

12. Système de couplage (32), comprenant un premier élément de couplage (19) doté d'au moins un premier élément de liaison (20) et un second élément de couplage (33) doté d'au moins un second élément de liaison (35) pour l'établissement d'une liaison amovible entre les deux éléments de couplage (19, 33), le système de couplage (32) comprenant un couplage multiple (1) selon l'une des revendications précédentes et le premier support de connexion (2) du couplage multiple (1) étant relié avec le premier élément de couplage (19) par le biais du module à ressort (7) pour une compensation des tolérances tridimensionnelles entre le premier support de connexion (2) et le premier élément de couplage (19), le second support de connexion (3) en outre étant relié avec le second élément de couplage (33).

13. Système de couplage (32) provenant de la revendication 12, **caractérisé en ce que** le premier élément de couplage (19) et le premier support de connexion (2) sont disposés espacés l'un par rapport à l'autre dans une direction d'assemblage (11) préférée du système de couplages (32).

14. Système de couplage (32) selon l'une des revendications 12 ou 13, **caractérisé en ce que** le second élément de liaison (35) est conçu sous la forme d'un palier pour le premier élément de liaison (19) ou que le premier élément de liaison (19) est conçu sous la forme d'un palier pour le second élément de liaison (35) pour une liaison mobile entre les deux éléments de couplage (19, 33).
